## Europäisches Patentamt
## European Patent Office
## Office européen des brevets

(19)

(11) Numéro de publication: **0 126 111 B1**

(12) **FASCICULE DE BREVET EUROPEEN**

(45) Date de publication du fascicule du brevet:
08.10.86

(51) Int. Cl.⁴: **A 23 L 3/22**, A 23 C 3/037

(21) Numéro de dépôt: **83903547.4**

(22) Date de dépôt: **23.11.83**

(86) Numéro de dépôt international:
**PCT/FR 83/00226**

(87) Numéro de publication internationale:
**WO 84/02062 (07.06.84 Gazette 84/14)**

(54) **PROCEDE ET DISPOSITIF DE TRAITEMENT THERMIQUE DE FLUIDE COMPORTANT UNE CONDENSATION RAPIDE DE VAPEUR.**

(30) Priorité: **24.11.82 FR 8219709**

(43) Date de publication de la demande:
**28.11.84 Bulletin 84/48**

(45) Mention de la délivrance du brevet:
**08.10.86 Bulletin 86/41**

(84) Etats contractants désignés:
**CH DE GB LI NL SE**

(56) Documents cités:
**EP - A - 0 041 669
BE - A - 645 112
CH - A - 306 359
FR - A - 1 114 013
FR - A - 1 230 497
FR - A - 1 355 142
FR - A - 1 379 179
FR - A - 2 354 527
FR - A - 2 375 900
FR - A - 2 441 344
NL - C - 93 134
US - A - 2 115 470
US - A - 4 161 909**

(73) Titulaire: **INSTITUT NATIONAL DE LA RECHERCHE AGRONOMIQUE (INRA), 149, rue de Grenelle, F-75341 Paris Cedex 07 (FR)**

(72) Inventeur: **FABRE, Claire, 42, Boulevard Pasteur, F-95120 Ermont (FR)**

(74) Mandataire: **Harlé, Robert et al, c/o Cabinet Harlé & Phélip 21, rue de la Rochefoucauld, F-75009 Paris (FR)**

ACTORUM AG

## Description

La présente invention se situe dans le domaine technique des procédés et dispositifs de traitement thermique d'un fluide par injection de vapeur dans ce fluide.

On connaît un grand nombre de dispositifs d'injection de vapeur, utilisés notamment pour la stérilisation des produits alimentaires fluides. Ces dispositifs sont généralement constitués d'une chambre de mélange du produit et de la vapeur, à l'intérieur de laquelle une partie de cette dernière se condense, se prolongeant par une section de chambrage, à l'intérieur de laquelle s'achève la condensation et par conséquent la montée en température. Le produit est ensuite refroidi dans un caisson d'évaporation sous vide dans lequel la vapeur condensée est évaporée. Le maintien de la température requise est généralement assuré par une régulation de la pression de la vapeur injectée, asservie à une mesure de la température dans le chambreur.

On peut citer à titre d'exemple l'injecteur décrit dans le document FR-A-1.114.013 qui permet ce type de traitement et qui se compose d'un tronçon de tube rectiligne qui est entouré d'une chemise de vapeur, cette vapeur pénètre dans la veine de produit à traiter, par des orifices de la paroi du tube, dans la zone d'écoulement à vitesse maximum, les orifices d'introduction de vapeur étant inclinés dans le sens de l'écoulement.

Par ce traitement, on détruit, dans le cas des produits alimentaires, les germes qui nuisent à leur longue conservation sans pour autant altérer sa valeur nutritionnelle ni ses caractères physico-chimiques. Pour le lait, par exemple, le traitement thermique qualifié de stérilisation U.H.T. consiste après un préchauffage en une élévation brusque de la température jusqu'à 150° et maintien de cette température pendant quelques secondes. Les caractéristiques du traitement thermique sont généralement imposées par voie réglementaire pour chaque type de produit, selon sa destination. Les normes internationales qui définissent les traitements de pasteurisation, stérilisation, traitement «U.H.T.» sont bien connues des spécialistes.

Dans FR-A-2 375.900 on règle la pression et la température de la chambre de mélange au moyen d'une valve de détente. Le réglage est effectué continuellement et corrige instantanément les tendances divergentes.

La vapeur est injectée uniquement au début de la chambre de mélange, la section restante servant à allonger le temps d'attente à la température de stérilisation.

US-A-2 115 470 décrit un appareillage fonctionnant selon un principe analogue à FR-A-2 375 900 savoir la vapeur est injectée également dans la première partie de la chambre de mélange.

Dans FR-A-2 354.527 l'appareillage présente une conduite entre l'injection de vapeur et l'étranglement servant à la détente. Cette conduite sert à maintenir le mélange produit-vapeur sous pression.

NL-C-93.134 décrit un dispositif pour la limitation, la distribution et l'emmagasinage du gaz destiné à maintenir constante la pression dans un réseau de distribution de gaz présentant des fluctuations de consommation, et alimenté de façon continue par une conduite à longue distance, l'ensemble comportant des moyens de stockage temporaire du gaz en excès.

Dans US-A-4 161 909 on ne cherche pas à maintenir constante la section de la vanne qui joue le rôle de l'ajutage de sortie du volume de mélange. Au contraire on agit sur la vanne pour maintenir une pression prédéterminée dans le tube en fonction des indications d'un capteur de pression.

FR-A-1 230 479 montre la disposition intérieure d'une chambre de mélange mais ne donne pas d'indication sur l'ajutage qui lui fait suite. Il n'est pas fait état d'un procédé utilisant cette chambre de mélange.

Les systèmes connus présentent les inconvénients suivants:

1. La stabilité de la température de stérilisation est très difficile à obtenir, et des fluctuations importantes autour du point de consigne sont observées en pratique, dès qu'un paramètre de l'écoulement ou de l'environnement est légèrement modifié. La cause en sera donnée plus loin. Un remède connu est décrit dans le document FR-A-2.441.344 pour diminuer ces fluctuations importantes de température consiste à s'affranchir des oscillations de l'injection de vapeur par le biais d'un écoulement critique de cette même vapeur, en amont de la chambre de mélange, dans la buse d'entrée de l'injecteur, cette disposition assure un débit constant de vapeur dans la chambre de mélange, qui, combiné à un débit constant de produit à traiter, devrait donner une bonne stabilité du traitement.

2. L'achèvement de la condensation dans le chambreur se traduit par une disparité des traitements thermiques due à l'absence d'homogénéité de la température au sein du produit. En outre, l'ignorance du volume occupé par le fluide rend difficile l'évaluation du temps de séjour à haute température.

Ces deux inconvénients imposent la nécessité d'exagérer les conditions de stérilisation, et cela au détriment des propriétés physico-chimiques et organoleptiques du produit à traiter.

Par ailleurs, la présence d'une section de chambrage, indispensable pour achever la montée en température, et établir une certaine homogénéité du traitement thermique, ne permet pas d'envisager un traitement dont la durée serait inférieure à la seconde.

Le dispositif du document FR-A-2.441.344 s'il permet une bonne stabilité de température, ne présente pas cependant, une efficacité satisfaisante au niveau du contrôle du temps de contact produit-vapeur, et cette dispersion des temps de contact peut provoquer des altérations sensibles du produit traité.

Un des buts de la présente invention est d'assurer une condensation complète de la vapeur injectée à l'intérieur de l'injecteur.

Un autre but est d'assurer un traitement thermique stable au cours du temps, et ne nécessitant pas des systèmes de régulation complexes.

Un autre but encore est de permettre des traitements thermiques des liquides par injection de vapeur de très courte durée (< 1s).

La présente invention fournit donc un procédé de traitement thermique d'un fluide dans lequel on injecte de la vapeur dans une chambre traversée par l'écoulement et se terminant par un rétrécissement brusque percé d'un ajutage qui présente la particularité que pour un fluide donné qu'on veut faire passer d'une première température à une seconde plus élevée, on détermine le débit massique du fluide et les sections de l'ajutage et de la chambre de mélange pour obtenir une chute de pression au passage de l'ajutage qui est comprise entre une valeur trop forte, qui ne permettrait pas d'injecter la quantité de vapeur nécessaire pour le réchauffement désiré, et une valeur trop faible qui correspondrait à l'injection d'une quantité de vapeur trop forte, laquelle ne serait pas totalement condensée, et on maintient simultanément constants le débit massique du fluide et les sections de l'ajutage et de la chambre de mélange.

Suivant une modalité intéressante après avoir fixé le débit massique de fluide et les sections d'ajutage et de la chambre de mélange, on maintient constante la chute de pression à sa valeur de commande en agissant sur la pression en aval de l'ajutage. Toutefois, suivant une modalité préférée on détermine la vitesse massique et le diamètre de l'ajutage ainsi que les conditions opératoires, telles que pression, nature du matériau de l'ajutage et teneur en gaz du fluide, pour obtenir un écoulement critique du fluide dans l'ajutage.

De préférence, dans ce cas, l'écoulement de fluide à travers l'ajutage étant maintenu en régime critique, on régule la valeur de consigne de la pression d'introduction de la vapeur dans la chambre en fonction de la température de fluide après condensation de la vapeur.

Egalement, dans le même cas, il est intéressant de prévoir qu'on envoie le fluide dans une enceinte de détente sous pression réduite et on fait pénétrer le fluide dans ladite enceinte immédiatement après qu'il a passé le point où l'écoulement critique est obtenu. On obtient ainsi un traitement ultra-court.

Dans le dispositif selon l'invention, si l'on ne cherche pas à obtenir un écoulement critique, il est avantageux de prévoir que le rétrécissement brusque est constitué par une partie conique ayant un angle au sommet supérieur à 30° environ.

Si on cherche au contraire à obtenir un écoulement critique, il est avantageux de prévoir que simultanément le rétrécissement brusque rejoint l'ajutage en faisant avec lui un angle compris entre 60 et 120°C et que la surface intérieure de l'ajutage comporte des sites de nucléation.

De préférence, pour le traitement des débits importants, le dispositif comprend plusieurs ajutages disposés en parallèle.

L'invention se relève particulièrement avantageuse en cas où le fluide est un produit alimentaire car elle permet d'obtenir un traitement de pasteurisation ou stérilisation d'une durée inférieure à une seconde.

L'invention va maintenant être exposée plus en détail à l'aide d'exemples non limitatifs illustrés par les dessins parmi lesquels:

Fig. 1 est une vue en coupe longitudinale d'un dispositif selon l'invention;

Fig. 2 est une vue analogue d'un autre dispositif selon l'invention;

Fig. 3 est une vue schématique d'un ensemble équipé d'un dispositif selon la figure 2;

Fig. 4 est une vue schématique d'un autre ensemble équipé d'un dispositif selon l'invention;

Fig. 5 est un schéma de régulation;

Fig. 6 est un autre schéma de régulation;

Fig. 7 est un diagramme illustrant la variation de la pression le long du dispositif pour différents régimes;

Fig. 8 est un diagramme illustrant les relations entre la pression en amont critique et le débit massique;

Fig. 9 est un diagramme montrant les relations entre la température atteinte et la pression en aval;

Fig. 10 est un schéma illustrant les variations de températures dans un traitement de produit alimentaire.

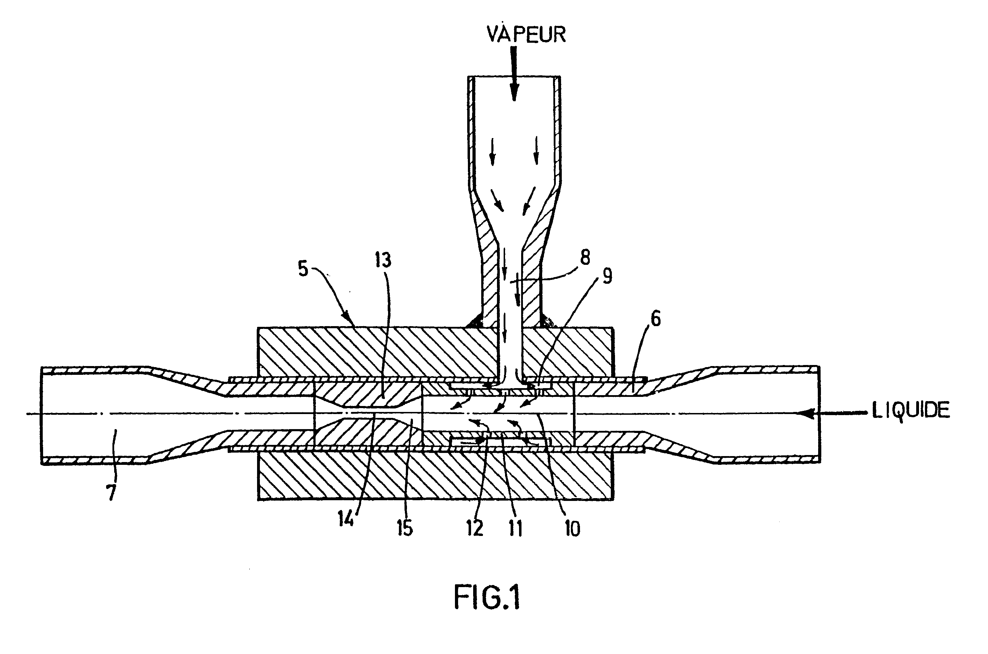

La figure 1 représente un injecteur qui assure une introduction de vapeur dans un courant de produit à traiter. Les différents éléments énoncés qui constituent l'injecteur sont démontables pour permettre un nettoyage facile de chacune des pièces en contact avec le produit à traiter. Cet injecteur 5 comporte une tubulure d'entrée 6 du produit fluide à traiter et une tubulure de sortie 7 située dans le prolongement axial de l'entrée et formant partie du chambreur. La vapeur arrive dans l'injecteur par une tubulure 8 latérale; elle pénètre d'abord dans une chambre annulaire 9 autour de la chambre de mélange 10 située au centre de l'injecteur. Les deux chambres 9 et 10 sont séparées par une paroi cylindrique 11 comportant plusieurs orifices 12 de passage de vapeur disposés à raison de plusieurs sur des circonférences de la paroi.

La chambre de mélange 10 prolonge la tubulure d'entrée 6 en ayant le même diamètre et elle est limitée à son extrémité par une pièce 13, percée d'un ajutage axial 14. Cette pièce 13 comporte une partie d'entrée conique convergente 15, qui se raccorde à son extrémité amont, aux parois de la chambre 10 et à son extrémité aval, à l'ajutage 14. La pièce 13 est symétrique, sa partie aval est de même forme que sa partie amont, et se raccorde de la même façon à la tubulure de sortie. L'angle au sommet de la partie conique 15 présente une certaine importance car il doit être au moins égal à 30° environ (c'est-à-dire qu'en coupe, la paroi fait un angle au moins égal à 15° avec l'axe). De préférence, cet angle est de 60° ± 15°, mais il peut aller jusqu'à 90° et au-delà.

Cette partie conique constitue le rétrécissement brusque dont il a été parlé plus haut. Les sections de la chambre 10 et de l'ajutage 14, doivent être choisies en fonction des conditions de travail et du but recherché. A titre d'information non limitative, on peut indiquer que les essais satisfaisants ont été faits pour des débits de 150 kg/heure environ avec des diamètres respectifs de la chambre et de l'ajutage de 9 mm et 2,3 mm, soit un rapport de sections d'environ 11. La longueur de l'ajutage 14 peut varier dans de larges limites, mais il est préférable qu'elle soit supérieure à son diamètre.

En fonctionnement, la pression de la vapeur dans la chambre 9 est légèrement supérieure à la pression régnant dans le produit à traiter à l'entrée de la chambre de mélange 10. La vapeur pénètre la veine fluide perpendiculaire et se mélange au produit avant de pénétrer dans le brusque rétrécissement constitué par la partie conique 15. Ce brusque rétrécissement oblige la vapeur à se condenser avant de pénétrer dans l'ajutage.

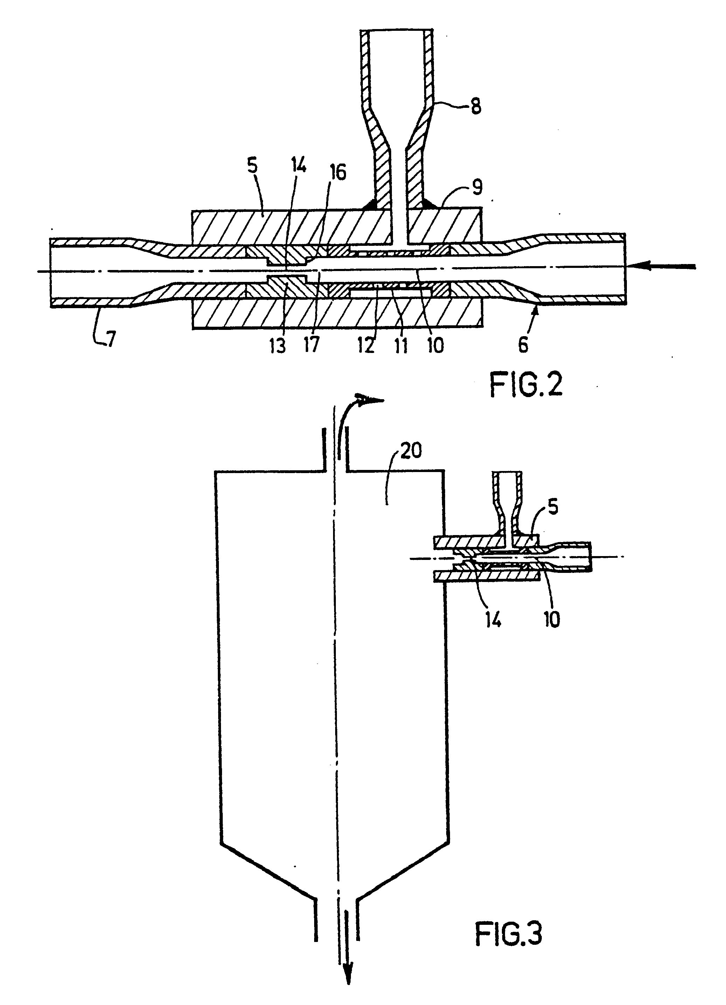

La figure 2 est relative à un appareillage qui diffère très peu en apparence de celui de la figure 1, mais dont le fonctionnement est néanmoins très différent. Sur les deux figures, les mêmes parties portent les mêmes repères.

La différence entre les deux dispositifs porte essentiellement sur la forme de la pièce 13 qui est munie d'un ajutage 14. Cette pièce comporte, en amont de l'ajutage, non pas une partie conique mais une surface plane transversale 16 qui fait un angle droit avec une partie cylindrique 17 qui prolonge les parois de la chambre 10 sans variation de section. La surface 16 fait également un angle droit avec la surface intérieure de l'ajutage 14. En fait, la surface transversale 16 peut n'être pas obligatoirement plane, mais elle peut être conique avec un angle au sommet très important par exemple entre 160° et 200°. Avec un tel dispositif, et si les conditions sont convenables par ailleurs, on obtient, au niveau de l'ajutage, un écoulement critique correspondant à l'apparition du phénomène de cavitation au voisinage du point de contraction maximale de la veine fluide, ce point se trouvant dans l'ajutage, à faible distance de son intersection avec la surface transversale 16.

Les données pratiques de l'établissement d'une condensation totale de la vapeur (cas des figures 1 et 2) et d'un écoulement critique (cas de la figure 2) sont données ci-après.

*Conditions de condensation*

Le choix du diamètre de l'ajutage, tous autres paramètres étant fixés, résulte d'un compromis.

Si ce diamètre est trop large, il y a trop de vapeur injectée et/ou une mauvaise condensation.

S'il est trop étroit, il n'y a pas assez de vapeur injectée et/ou il y a une perte de pression trop importante pour que la pression dans le chambreur soit supérieure à la pression de vapeur saturante. Exemple de condensation en régime non critique:

fluide: eau
débit massique: m = 140 kg/h
température initiale $\theta_0$ = 70°C
température finale $\theta_1$ = 140°C.

Un résultat convenable a été obtenu avec d = 2,3 mm et $\dfrac{d}{D}$ = 0,26, d'étant le diamétre de l'ajutage et D celui de la chambre.

La perte de pression dans l'ajutage détermine la quantité de vapeur injectée si le débit liquide est imposé. Le rétrécissement brusque favorise la turbulence et augmente la surface de contact produit-vapeur.

*Conditions de régime critique*

Le régime critique se caractérise par un débit maximal impossible à dépasser. Lorsque ces conditions sont établies, il y a indépendance des paramètres de l'écoulement en amont et en aval d'une section de l'ajutage appelée section critique.

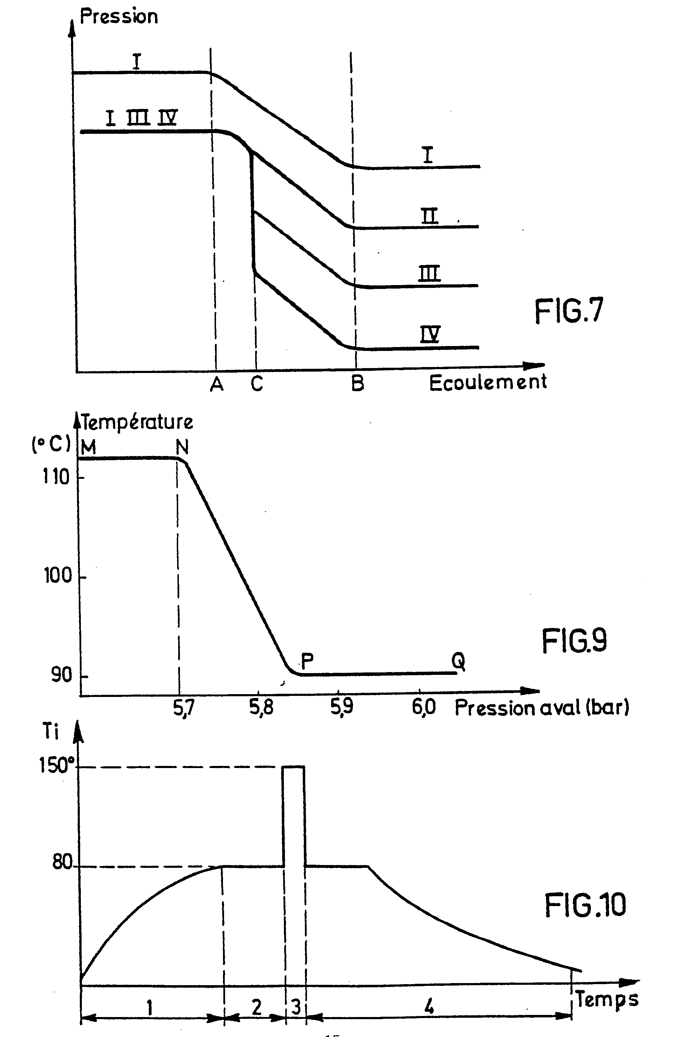

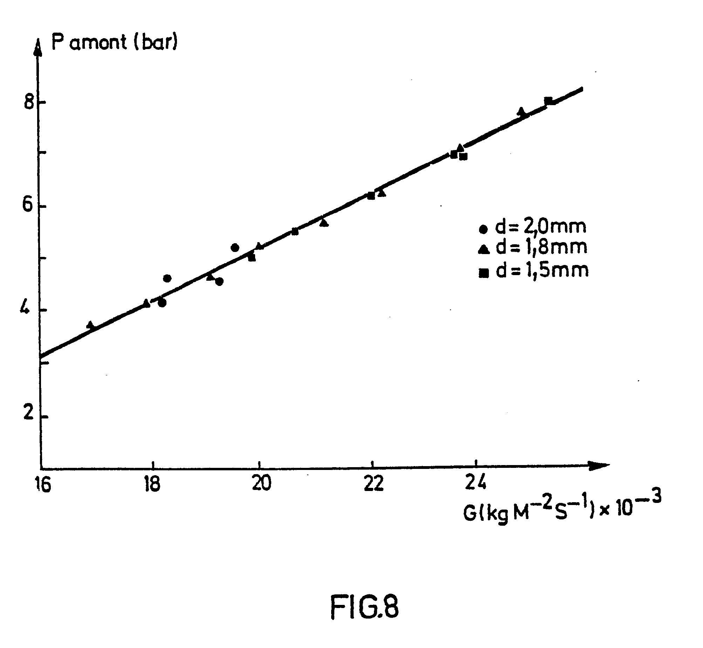

La figure 7 illustre la différence entre les régimes à écoulement critique et les autres. Sur cette figure, quatre courbes montrent la variation de la pression dans l'ajutage (partie AB) et de part et d'autre de celui-ci, pour différents régimes correspondant à diverses pressions amont et aval et pour un même débit.

La courbe I correspond à des pressions amont et aval relativement élevées sans régime critique. La pression est sensiblement constante en amont de l'ajutage, elle diminue dans celui-ci et atteint la valeur de la pression aval à la sortie de l'ajutage.

La courbe II correspond à un couple de pressions amont et aval plus faible, mais à la limite du régime critique. On constate que les courbes I et II sont à peu près parallèles.

La courbe III correspond à une pressions amont égale à celle de la courbe II, mais à une pression aval plus faible, avec apparition d'un régime critique en un point C de l'ajutage. On constate au point C un brusque décrochement de la pression, laquelle se raccorde ensuite à la pression aval.

La courbe IV correspond à une pression aval inférieure à celle de la courbe III.

On constate l'indépendance totale des écoulements entre les régimes situées en amont et en aval du point C dès lors qu'apparaît un régime critique. On notera que la position du point C n'est pas fixée dans l'ajutage et dépend des conditions opératoires.

Si, en régime critique, la pression en aval est sans relation avec la pression en amont, elle est aussi sans relation avec le débit de vapeur et donc avec l'élévation de température entraînée par ce débit. Il devient dès lors possible d'envisager des traitements comportant des chauffages intenses et de très courte durée.

*Conditions à réaliser sur le dispositif pour obtenir un régime critique*

Que la pression descende à l'intérieur de l'ajutage, en dessous de la pression de vapeur saturante par effet du rétrécissement brusque, et éventuellement du frottement.

Qu'il existe sur la surface interne de l'ajustage 14 un nombre de sites de nucléation permettant un développement suffisant de la cavitation (poches, bulles, film, etc...)

présence éventuelle de gaz dissous dans le produit à traiter et susceptible de se dégazer. Ces trois conditions doivent être associées pour obtenir dans une section critique un milieu diphasique permettant le blocage.

Parmi les facteurs influençant l'obtention de ces conditions

la nature du produit à traiter

la vitesse massique G égale au rapport (débit massique) / (section de l'ajutage)

la pression en amont

les rapports $\dfrac{L}{s}$ et $\dfrac{s}{S}$, L et s représentant respectivement la longueur et la section de l'ajutage 14 et S la section avant le rétrécissement

l'état de la surface intérieure de l'ajutage, cet état de surface dépendant notamment du matériau dont est faite la pièce 13 (l'acier inox par exemple s'est révélé favorable en présence de liquides aqueux) et de la nature et du monde d'usinage utilisés pour l'obtention de l'ajutage 14.

Par ajustement dans tous ces paramètres, on peut atteindre le régime critique dans des conditions variées.

Par exemple, dans le cas de l'eau, avec ajutage en inox, on a obtenu des régimes critiques dans les conditions suivantes, la forme du dispositif correspondant à la figure 2:

$$\frac{d}{D} = 0,2; \frac{L}{d} \text{ de la gamme 1,1 à 5, 6, d = 1,8 mm,}$$

température: 20°C pression amont: 5 bars, $G = 20.000 \text{ kg m}^{-2} \text{ s}^{-1}$

On a également obtenu des régimes critiques dans les conditions suivantes:

$$\frac{d}{D} = 0,26; \frac{L}{d} = 4,4; d = 2,3 \text{ mm,}$$

température: 140°C pression amont: 10 bars, $G = 10.360 \text{ kg m}^{-2} \text{ s}^{-1}$

La figure 8 montre la relation entre la pression amont «critique», c'est-à-dire celle au-dessous de laquelle on ne peut pas descendre pour que la vitesse massique dans l'ajutage donné et cette vitesse massique pour diverses valeurs du diamètre d de l'ajutage 14, les autres paramètres étant inchangés; nature et température du fluide (eau à 70°C), état da surface de l'ajutage (inox) diamètre de la chambre 10 (90 mm). On constate qu'il existe une corrélation entre la vitesse massique et la pression amont critique, ce qui permet de déterminer les caractéristiques d'une installation à partir d'un petit nombre d'essais.

La figure 9 montre la relation entre la température atteinte dans une installation conforme à la figure 2, en fonction de la pression aval, dans les conditions suivantes:

fluide: eau — débit: 0,123 m³/h, d = 2 mm, L = 10 mm, D = 90 mm, pression amont = 6,7 bars, température du fluide à l'entrée dans la chambre 10: 90°C.

La figure montre que, pour les pressions aval faibles, (section MN), la température atteinte est élevée et indépendante de la pression aval. On se trouve alors dans les conditions de régime critique, et la pression aval est sans influence sur ce qui se passe à l'amont, comme on l'a dit plus haut. La température atteinte ne dépend que de la pression d'injection de vapeur, laquelle est constante dans l'expérience.

La figure 9 montre ensuite une partie où la température décroît rapidement quand la pression aval augmente (section NP). Cette situation correspond à des régimes non critiques, et toute augmentation de la pression en aval diminue la quantité de vapeur qu'il est possible d'injecter, donc l'élévation de température qu'on peut obtenir.

La figure 9 montre enfin une partie où la température atteinte est égale à la température d'entrée (section PQ). Cela correspond au fait que la pression aval étant trop élevée, il y a une surpression amont qui ne permet plus d'injecter de la vapeur dans le fluide et la température de celui-ci est donc inchangée.

Lorsqu'on opère dans les conditions correspondant à des régimes non critiques (partie NP de la courbe de la figure 9), il est avantageux de réguler avec précision la pression aval.

Ceci peut être obtenu, par exemple avec le montage schématisé à la figure 5.

Sur cette figure, outre le dispositif 5, qui peut être du type représenté à la fig. 1, on a représenté une chambre à pression réduite 20, reliée à une pompe à vide 21, et dans laquelle le fluide subit une détente avant d'être recueilli à la partie inférieure 22 et évacué par une pompe d'extraction 23. La partie aval du dispositif 5 est reliée à la chambre 20 par une conduite 24 sur laquelle est intercalée une vanne à action proportionnelle 25. Deux capteurs de pression 26, 27 situés respectivement en amont de l'ajutage 14, par exemple dans la chambre 10, et en aval de cet ajutage, sont reliés à un dispositif 28 qui émet des signaux correspondant à la différence de pression entre ces deux capteurs, c'est-à-dire à la perte de charge dans l'ajutage 14. Ces signaux sont envoyés à un dispositif de régulation 29, qui, à son tour, commande l'ouverture ou la fermeture de la vanne 25. On sait que la température atteinte est une fonction de la pression aval, comme cela ressort à la figure 9. Une fluctuation accidentelle de la pression amont agit sur la partie de charge (variation de la pression de vapeur par exemple). Elle est compensée, grâce au système décrit, par une variation de la pression aval.

La figure 3 est relative à un mode d'implantation de l'injecteur de la figure 2. La sortie de l'injecteur 5 débouche directement dans la chambre à pression réduite 20, en soumettant la sortie de l'ajutage 14 à la dépression de l'évaporateur de sorte que le traitement thermique à haute température se termine au niveau du seuil critique. La dépression partielle dans la chambre 20, formant évaporateur, qui assure la séparation vapeur-produit, s'exerce directement sur la veine fluide après le seuil critique. Cette disposition assure un refroidissement très brusque et bien contrôlé du produit qui a été chauffé dans la chambre 10. Elle se prête donc particulièrement bien à des traitements dans lesquels le produit est soumis à une élévation de température très intense pendant un temps très court.

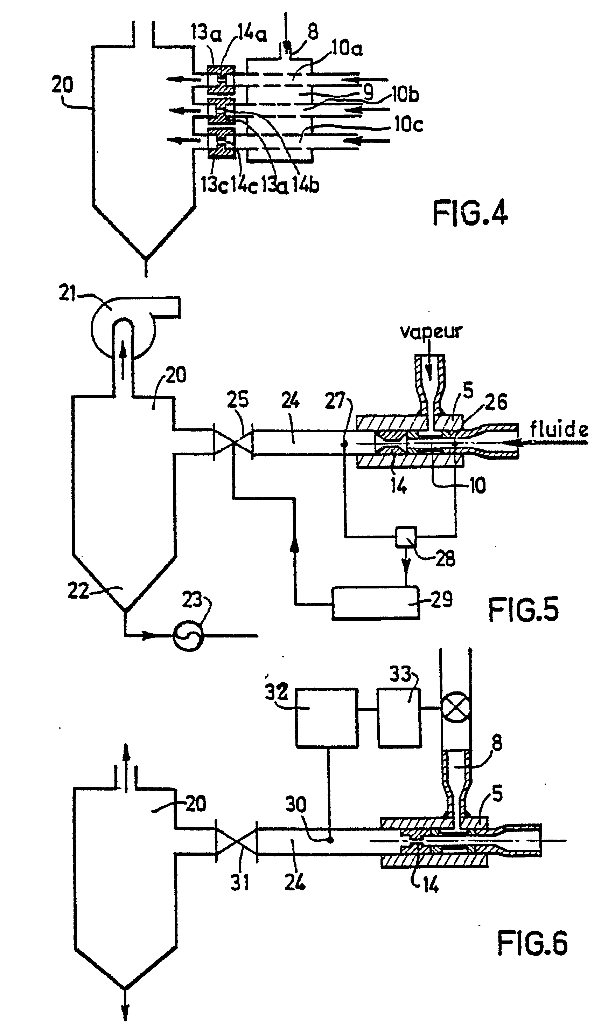

La figure 4 est relative à une installation destinée à traiter des débits importants. Comme on l'a dit plus haut, l'obtention des conditions désirées dépend à la fois des valeurs de s (section de l'ajutage) et du rapport s/S, S étant la section avant le rétrécissement. Cela montre qu'il n'est pas possible de s'affranchir simplement des conditions d'échelle, et que, dans certains cas, il est impossible d'obtenir, pour de grands débits, les résultats correspondant à des débits plus faibles par un simple changement des paramètres opératoires. Dans ce cas, il est prévu une série de pièces 13a, 13b, 13c, etc... pourvues d'ajutages 14a, 14b, 14c, etc... disposées en parallèle, chacune entre sa chambre 10a, 10b, 10c et une chambre à pression réduite commune 20 ou un chambreur commun ou non.

Avantageusement, la tubulure d'amenée de vapeur 8 et la chambre annulaire 9 antourant les chambres 10a, 10b, 10c sont communes. Chaque injecteur peut avoir sa régulation propre. Les pièces 13a, 13b, 13c peuvent être du type de la figure 1 (sans régime critique), ou de celui de la figure 2 (avec régime critique).

La figure 6 est relative à un perfectionnement du dispositif selon lequel on fonctionne avec un régime critique. Comme on l'a dit plus haut, un tel dispositif permet d'obtenir des conditions de fonctionnement remarquablement stables. L'appareillage décrit a permis, par exemple, d'obtenir des constances de température atteinte, telles que l'écart-type de celle-ci n'atteignait que 0,04°C (mesures faites toutes les secondes pendant 2 minutes). Il est cependant possible d'améliorer encore les performances. Pour celà, un capteur de température 30 est placé sur la conduite 24 qui va de la sortie de l'ajutage 14 à la chambre à pression réduite 20. Une vanne à ouverture fixe, ou d'un diaphragme 31 est placée en aval du capteur 30, de façon que la température indiquée par celui-ci soit indépendante des conditions régnant dans la chambre 20. Les signaux du capteur 30 sont envoyés à un dispositif de commande 32, qui fixe la valeur de consigne de la pression d'introduction de la vapeur dans le dispositif. Il va de soi qu'un dispositif de régulation classique 33 maintient la pression réelle au voisinage de la valeur de consigne. Le dispositif de régulation et le dispositif 32 peuvent bien entendu faire partie d'un même ensemble électronique.

On s'affranchit ainsi des conséquences d'un dérivé des conditions critiques, même pour les durées prolongées.

Parmi les avantages de l'invention qu'on vient de décrire, on peut citer les suivants:

la condensation totale dans l'injecteur permet une répartition des températures uniforme dans le chambreur, donc, plus besoin de surévaluer le temps de chambrage;

le régime critique entraîne une simplification de la régulation et la possibilité de travailler avec temps très courts;

l'ajutage de diamètre petit a pour conséquence que la vitesse dans l'ajutage est de l'ordre de 20 m/s. Cette vitesse élevée empêche l'encrassement. Par exemple, on a pu obtenir des fonctionnements de 2 heures avec du lait au voisinage de la température d'ébullition, ou nettement au-dessus de celle-ci, sans aucun encrassement. En fait, en régime critique, loin d'avoir un encrassage, la cavitation entraîne une érosion de l'ajutage. Il y a donc intérêt à prévoir cette pièce en une matière résistant à l'usure, tout en fournissant un nombre suffisant de sites de nucléation. L'inox a donné de bons résultats. Il faut noter que la disposition de l'injecteur, formé d'un petit nombre de pièces et facilement démontable, facilite le changement de la pièce 13, portant l'ajutage, qui est la seule pièce à s'user. Cette pièce est d'ailleurs de petites dimensions et d'usinage simple, si bien que son prix est peu élevé.

Une des applications les plus intéressantes du procédé et des dispositifs selon l'invention réside dans le traitement des produits alimentaires tels que le lait en particulier, mais aussi les jus de fruits, etc.

La courbe représentée figure 10 illustre le traitement classique subit par un produit tel que le lait dans le cas d'une stérilisation U.H.T. Le lait subit un préchauffage 1 qui l'amène à une température de 50 à 80° puis un préchambrage 2 avant d'être introduit dans la chambre de mélange de l'injecteur où arrive la vapeur sous pression; ce mélange avec la vapeur provoque une élévation instantanée de température jusqu'à 140°-150°. Le chambrage 3 du produit à cette température élevée dure le temps minimum nécessaire à la destruction des germes; le chambrage 3 se termine par une évaporation «flash» qui ramène le produit à une température de 50 à 80° avant d'entrer dans la phase finale de refroidissement 4.

La condensation totale en sortie de l'injecteur selon l'invention permet une température homogène dans le «chambreur» (partie située entre l'ajutage 14 et la chambre de pression réduite 20) et un ajustement exact de la durée de chambrage.

L'obtention du régime critique permet une très grande stabilité de température. On peut donc s'affranchir de tout système de régulation de la température de stérilisation. Un réglage de la pression de vapeur avant l'injection en boucle ouverte suffit avec, éventuellement, un asservissement du point de consigne de pression de vapeur en fonction de la température dans le chambreur s'il y en a un.

Lors des traitements de tous les produits fragiles notamment ceux contenant des protéines et qui sont utilisés, outre l'industrie alimentaire, dans les industries pharmaceutiques et des cosmétiques, le procédé de l'invention permet d'obtenir des résultats qui, jusqu'ici n'avaient pas été atteints. Par exemple, en se plaçant en régime critique, l'ajutage débouchant en sortie directement dans la chambre à basse pression, on peut réaliser des traitements de 0,06 s à 160°C ou 0,005 s à 170°C dans le cas du lait. On peut aussi réaliser la pasteurisation «instantanée à 90°C prévue par la législation, mais non réalisée à ce jour.

## Revendications

1. Procédé de traitement thermique d'un fluide dans lequel on injecte de la vapeur dans une chambre traversée par l'écoulement et se terminant par un rétrécissement brusque percé d'un ajutage, et dans lequel, pour un fluide donné qu'on veut faire passer d'une première température à une seconde, plus élevée, on détermine le débit massique du fluide et les sections de l'ajutage et de la chambre de mélange pour obtenir une chute de pression au passage de l'ajutage qui est comprise entre une valeur trop forte, qui ne permettrait pas d'injecter la quantité de vapeur nécessaire pour le réchauffement désiré, et une valeur trop faible qui correspondrait à l'injection d'une quantité de vapeur trop forte, laquelle ne serait pas totalement condensée, et on maintient simultanément constants le débit massique du fluide et les sections de l'ajutage et de la chambre de mélange.

2. Procédé selon la revendication 1, caractérisé en ce qu'après avoir fixé le débit massique du fluide et les sections de l'ajutage et de la chambre de mélange, on maintient constante la chute de pression à une valeur de commande en agissant sur la pression en aval de l'ajutage.

3. Procédé selon la revendication 1, caractérisé en ce qu'on détermine la vitesse massique et le diamètre de l'ajutage ainsi que les conditions opératoires, telles que pression, nature du matériau de l'ajutage et teneur en gaz du fluide, pour obtenir un écoulement critique du fluide dans l'ajutage.

4. Procédé selon la revendication 3, caractérisé en ce que l'écoulement de fluide à travers l'ajutage étant maintenu en régime critique, on régule la vapeur de consigne de la pression d'introduction de la vapeur dans la chambre, en fonction de la température de fluide après condensation de la vapeur.

5. Procédé selon la revendication 3 ou 4, dans lequel on envoie le fluide dans une enceinte de détente sous pression réduite, caractérisé en ce qu'on fait pénétrer le fluide dans ladite enceinte immédiatement après qu'il a passé le point où l'écoulement critique est obtenu.

6. Procédé selon l'ensemble des revendications 1 à 5, caractérisé en ce que le fluide est un produit alimentaire et en ce que le traitement thermique est un traitement de pasteurisation ou stérilisation d'une durée inférieure à une seconde.

7. Dispositif pour la mise en œuvre du procédé selon la revendication 1 ou 2, caractérisé en ce que le rétrécissement brusque est constitué par une partie conique ayant un angle au sommet supérieur à 30° environ.

8. Dispositif pour la mise en œuvre du procédé selon l'une des revendications 3 à 5, caractérisé en ce que le rétrécissement brusque rejoint l'ajutage en faisant avec lui un angle compris entre 60 et 120°C et en ce que la surface intérieure de l'ajutage comporte des sites de nucléation.

9. Dispositif pour la mise en œuvre de l'une des revendications 1 à 5, caractérisé en ce qu'il comprend plusieurs ajutages disposés en parallèle.


**Patentansprüche**

1. Verfahren zur thermischen Behandlung eines Mediums, wobei man Dampf in eine Kammer injiziert, die von der Strömung durchquert wird und die in einer plötzlichen Verengung endet, die in einem Rohransatz vorgesehen ist, wobei man ferner bei einem vorgegebenen Medium, das von einer ersten Temperatur auf eine zweite, höhere Temperatur erhitzt werden soll, die Massen-Durchflussleistung des Mediums bestimmt sowie die Rohransatzabschnitte und die Abschnitte der Mischkammer, um beim Passieren des Rohransatzes einen Druckabfall zu erzielen, der zwischen einem zu hohen Wert liegt, der ein Injizieren der für die gewünschte Erwärmung notwendige Dampfmenge nicht gestatten würde, und einem zu kleinen Wert, der dem Injizieren einer zu hohen Dampfmenge entspricht, die nicht vollständig kondensieren würde, wobei man gleichzeitig die Massen-Durchflussleistung des Mediums und die Abschnitte der Rohransätze und die Mischkammer konstant hält.

2. Verfahren nach Anspruch 1, dadurch gekennzeichnet, dass nach Fixierung der Massen-Durchflussleistung des Mediums und der Abschnitte der Rohransätze und der Mischkammer der Druckabfall auf einem Steuerungswert konstant gehalten wird, indem der Druck stromabwärts des Rohransatzes eingestellt wird.

3. Verfahren nach Anspruch 1, dadurch gekennzeichnet, dass die Massengeschwindigkeit und der Durchmesser des Rohransatzes sowie die Betriebsbedingungen, z.B. Druck, Material des Rohransatzes und Gasgehalt des Mediums, bestimmt werden, um die kritische Strömung des Mediums im Rohransatz zu bestimmen.

4. Verfahren nach Anspruch 3, dadurch gekennzeichnet, dass die Strömung des Mediums quer zum Rohransatz im kritischen Bereich gehalten wird, wobei der Dampf entsprechend dem Dampfeintrittsdruck in der Kammer in Abhängigkeit von der Temperatur des Mediums nach der Kondensation des Dampfes geregelt wird.

5. Verfahren nach Anspruch 3 oder 4, wobei das Medium in einen Entspannungsraum unter verringertem Druck eingeleitet wird, dadurch gekennzeichnet, dass die Einleitung erfolgt unmittelbar nachdem das Medium den Punkt passiert hat, an dem die kritische Strömung eintritt.

6. Verfahren nach den Ansprüchen 1 - 5, dadurch gekennzeichnet, dass das Medium ein Lebensmittel ist, wobei die thermische Behandlung ein Pasteurisieren oder Sterilisieren ist, das kürzer als eine Sekunde dauert.

7. Vorrichtung zur Durchführung des Verfahrens nach Anspruch 1 oder 2, dadurch gekennzeichnet, dass die plötzliche Verengung durch ein konisches Teil gebildet wird, das einen Spitzenwinkel grösser als etwa 30° hat.

8. Vorrichtung zur Durchführung des Verfahrens nach einem der Ansprüche 3 - 5, dadurch gekennzeichnet, dass die plötzliche Verengung in den Rohransatz übergeht und mit diesem einen Winkel zwischen 60° und 120° einschliesst und dass die Innenfläche des Rohransatzes Kernbildungsgebiete aufweist.

9. Vorrichtung zur Durchführung des Verfahrens nach einem der Ansprüche 1 - 5, dadurch gekennzeichnet, dass mehrere parallele Rohransätze vorgesehen sind.

**Claims**

1. Process for the heat treatment of a fluid in which steam is injected in a chamber through which the flow passes and which ends in an abruptly narrowed part through which a nozzle extends, and in which process, for a given fluid which it is desired to bring from a first temperature to a second, higher temperature, the mass flow rate of the fluid and the sections of the nozzle and of the mixing chamber are determined in order to obtain a pressure drop, on passage through the nozzle, which is between too high a value, which would not permit injection of the amount of steam necessary for the desired heating, and too low a value which would correspond to the injection of too great an amount of steam which would not be completely condensed, and the mass flow rate of the fluid and the sections of the nozzle and the mixing chamber are simultaneously kept constant.

2. Process according to Claim 1, characterized in that after the mass flow rate of the fluid and the sections of the nozzle and mixing chamber have been fixed, the pressure drop is held constant at a control value by acting on the pressure downstream of the nozzle.

3. Process according to Claim 1, characterized in that the mass velocity and the diameter of the nozzle, and also the operating conditions, such as pressure, nature of the material of the nozzle, and the gas content of the fluid, are determined in order to obtain a critical flow of the fluid in the nozzle.

4. Process according to Claim 3, characterized in that while the flow of fluid through the nozzle is kept under critical conditions the set value of the pressure at which the steam is introduced into the chamber is regulated in dependence on the temperature of the fluid after condensation of the steam.

5. Process according to Claim 3 or 4, wherein the fluid is delivered into a pressure reduction chamber under reduced pressure, characterized in that the fluid is introduced into said chamber immediately after it has passed the point where the critical flow is obtained.

6. Process according to any one of Claims 1 to 5, characterized in that the fluid is a food product and in that the heat treatment is a pasteurization or sterilization treatment of a duration of less than one second.

7. Apparatus for applying the process according to Claim 1 or 2, characterized in that the abrupt narrowing is formed by a conical portion having an angle at the apex greater than about 30°.

8. Apparatus for applying the process according to one of Claims 3 to 5, characterized in that the abrupt narrowing joins the nozzle to form with it an angle between 60 and 120°, and in that the inner surface of the nozzle is provided with nucleation sites.

9. Apparatus for applying the process according to one of Claims 1 to 5, characterized in that it has a plurality of nozzles disposed in parallel.

VAPEUR

LIQUIDE

5  13  8  9  6

7

14  15  12  11  10

FIG.1

0 126 111

FIG.2

FIG.3

11

FIG.4

FIG.5

FIG.6

Pression

I

I III IV

I

II

III

IV

A  C                    B        Ecoulement

FIG.7

Température

(°C) M          N

110

100

P                    Q

90

5,7        5,8        5,9        6,0   Pression aval (bar)

FIG.9

Ti

150°

80

1        2  3        4           Temps

FIG.10

FIG.8